# EUROPÄISCHE PATENTSCHRIFT

(11) **EP 3 210 930 B1**
(45) Veröffentlichungstag und Bekanntmachung des Hinweises auf die Patenterteilung: **12.09.2018**
(21) Anmeldenummer: 17159262.9
(22) Anmeldetag: 28.03.2014
(51) Int. Cl.: B66C 23/80, E04G 21/04

(54) **FAHRBARE ARBEITSMASCHINE, INSBESONDERE AUTOBETONPUMPE UND HERSTELLUNGSVERFAHREN**
MOBILE WORKING MACHINE, IN PARTICULAR AUTOMATIC CONCRETE PUMP AND PRODUCTION METHOD
MACHINE DE TRAVAIL MOBILE, EN PARTICULIER POMPE À BÉTON AUTOMOTRICE ET PROCÉDÉ DE FABRICATION

(30) Priorität: 03.04.2013 DE 102013205888
(43) Veröffentlichungstag der Anmeldung: 30.08.2017
(62) Teilanmeldung aus: 14714261.6
(73) Patentinhaber: Putzmeister Engineering GmbH, 72631 Aichtal (DE)
(72) Erfinder: Fügel, Dietmar, 72649 Wolfschlugen (DE); Westermann, Karl, 72574 Bad Urach (DE)
(74) Vertreter: Pfiz, Thomas

(56) Entgegenhaltungen:
- WO-A1-86/00279
- CN-Y- 201 292 227
- DE-T2- 60 310 177
- DE-U1-202007 002 114

## Beschreibung

Die Erfindung betrifft eine fahrbare Arbeitsmaschine, insbesondere Autobetonpumpe, mit einer fahrzeugfesten Tragstruktur insbesondere für einen Betonverteilermast und mindestens zwei über jeweils eine Gelenkstelle mit der Tragstruktur gelenkig verbundenen Stützbeinen, wobei jede Gelenkstelle zwei im seitlichen Abstand voneinander über den Rand einer Begrenzungswand der Tragstruktur gabelförmig überstehende, aus einem Vollmaterial gebildete und mit jeweils einer Lagerbohrung versehene Lagerplatten und einen die miteinander fluchtenden Lagerbohrungen vertikal durchsetzenden Gelenkbolzen umfasst. Die Erfindung betrifft weiter ein Verfahren zur Herstellung einer Gelenkstelle für die Stützbeine einer solchen fahrbaren Arbeitsmaschine.

Die Anlenkung von Schwenkbeinen an Mastböcke von Autobetonpumpen gleicht in ihrer Bauweise zwei Gliedern einer Fahrradkette, die über einen Bolzen miteinander verbunden sind. Dabei bildet das Schwenk- bzw. Stützbein ein das eine "Kettenglied", der Mastbock bzw. die Tragstruktur das andere. Durch den Gelenkbolzen sind die beiden Teile so miteinander verbunden, dass ein seitliches Ausschwenken der Beine um die vertikale Bolzenachse möglich ist. Im Unterschied zur Fahrradkette ist die gelenkige Verbindung von Schwenkbein und Mastbock quer zur Verbindung - also in vertikaler Richtung - Querkraft- und momentenbelastet. Dementsprechend werden die Lagerlaschen durch Lagerplatten aus Vollmetall gebildet, die herkömmlich über eine vertikale Begrenzungswand gabelförmige überstehen, so dass auch der Herstellungsaufwand im Vergleich zu mehrteiligen Kastenkonstruktionen mit eingesetzten Buchsen reduziert wird.

In diesem Zusammenhang ist auch zu berücksichtigen, dass die Lagerbohrungen für den Schwenkbeinbolzen in die Laschen des Mastbocks üblicherweise mittels sogenannter Bearbeitungszentren eingebracht werden. Diese Zentren sind mit einem geeigneten Bohrer bzw. Fräser ausgestattet, der von einem Futter gehalten und über einen Motor angetrieben wird. Die Werkzeugaufnahme samt Antrieb nimmt dabei deutlich mehr Raum ein als das Werkzeug selbst. Die Dimension der Werkzeugaufnahme würde keine Rolle spielen, wenn die Bohrungen in die Laschen des Mastbocks jeweils von oben bzw. von unten eingebracht würden, da ober- bzw. unterhalb des Mastbocks ausreichend Raum für das Bearbeitungsgerät bleibt. Ein solches Vorgehen würde aber ein Drehen des Mastbocks um 180° bedeuten, da Bearbeitungszentren in ihrem Werkzeughub sehr begrenzt sind und damit der Hub nicht zum Einbringen der Bohrung von oben und von unten ausreicht. Das Drehen des Mastbocks wiederum bedeutet entsprechend aufwändige und teure Vorrichtungen zur Fixierung des Bauteils bzw. Ungenauigkeiten beim Einbringen der Bohrung durch das Drehen selbst. Fährt das Bearbeitungsgerät aber in den Innenbereich zwischen den Laschen des Mastbocks und bearbeitet von hier aus zumindest eine der beiden Lagerbohrungen, kann der Gelenkbolzen nur so nahe an der Tragstruktur des Mastbocks liegen, dass noch ausreichend Platz für das Bearbeitungsgerät bleibt. Die WO 86/00279 beschreibt eine gattungsgemäße fahrbare Arbeitsmaschine mit den Merkmalen des einleitenden Teils des Anspruchs 1.

Ausgehend hiervon liegt der Erfindung die Aufgabe zugrunde, die im Stand der Technik bekannten Arbeitsmaschinen und Herstellungsverfahren weiter zu verbessern und eine möglichst direkte und materialschonende Krafteinleitung in die fahrzeugfeste Tragstruktur mit einfachen Maßnahmen zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den Abstand des Gelenkbolzens zu den Stellen der Krafteinleitung in die Tragstruktur zu minimieren. Dementsprechend wird erfindungsgemäß vorgeschlagen, dass der Gelenkbolzen in seinem Mittelbereich zwischen den Lagerplatten einen kleineren Durchmesser als in seinen die Lagerplatten durchsetzenden Endabschnitten aufweist. Durch die mittig verjüngte, bevorzugt doppelkonische Ausbildung wird eine den auftretenden Belastungen angepasste und materialsparende Bauform erreicht, während zugleich ein zusätzlicher Freiraum für den Einbau von Funktionsteilen, beispielsweise Schwenksensoren geschaffen wird. In einer vorteilhaften Ausgestaltung wird vorgeschlagen, dass die dem Gelenkbolzen zugewandte Begrenzungswand in ihrem Mittelbereich zwischen den Lagerplatten einen größeren Abstand zu der Achse des Gelenkbolzens als in ihren an den Lagerplatten angrenzenden Randbereichen aufweist. Dadurch ist es möglich, den Überstand der Lagerplatten über die Tragstruktur des Mastbocks so gering wie möglich zu gestalten, ohne die erforderliche Genauigkeit bei der Fertigung der Lagerbohrungen zu beeinträchtigen. Durch die Hohlkontur der Begrenzungswand wird ein zusätzlicher Arbeitsraum für das Bearbeitungsgerät freigehalten, während die Lagerbohrungen mit geringem Überstand an der Tragstruktur geschaffen werden können. Dadurch kann auch auf überdimensionierte Bauteile zur Kraftaufnahme, die zu Lasten des Maschinengewichts gehen, verzichtet werden. Vorteilhaft lässt sich dieselbe Bauweise auch am Stützbein selbst anwenden, wenngleich hier die Anforderungen aufgrund der kleineren Abmessungen der Bauteile zumindest in zwei Dimensionen im Vergleich zum Mastbock nicht so hoch sind.

Vorteilhafterweise weist die Begrenzungswand eine dem Gelenkbolzen zugewandte, konkave oder winklige Hohlkontur auf, so dass im Zwischenbereich zwischen den Lagerplatten hinreichend Arbeitsraum für eine maschinelle Erzeugung der Lagerbohrungen zur Verfügung steht.

Eine weitere bauliche Vereinfachung lässt sich dadurch erreichen, dass die Begrenzungswand zwei stumpfwinklig aufeinander zulaufende Wandteile aufweist, wobei die Wandteile einen im Querschnitt dreieckförmigen Freiraum begrenzen.

In konstruktiver Hinsicht ist es weiter von Vorteil, wenn die Begrenzungswand mit einem Obergurt und einem Untergurt als Kastenkonstruktion verschweißt ist, und wenn die Lagerplatten an dem Ober- bzw. Untergurt starr befestigt sind.

Zur Fertigungsvereinfachung ist es vorteilhaft, wenn die Lagerbohrung mittels eines Bohr- oder Fräswerkzeugs in dem Vollmaterial der Lagerplatte gebildet ist.

Vorteilhafterweise besitzen die Lagerplatten als Vollmetallplatten eine Dicke von mehr als 20 mm, insbesondere mehr als 40 mm. Dadurch lassen sich in einer einfachen Bauweise die auftretenden Kräfte und Momente aufnehmen. Im Sinne einer direkten Krafteinleitung ist es auch günstig, wenn der Abstand zwischen dem Rand der Lagerbohrungen und der Begrenzungswand kleiner als der Durchmesser der Lagerbohrungen ist.

In einer weiteren vorteilhaften Ausgestaltung der Gelenkverbindung sind die Schwenkbeine über jeweils zwei Lagerlaschen an dem Gelenkbolzen angelenkt, wobei sich die Lagerplatten und Lagerlaschen paarweise seitlich überlappen.

In verfahrensmäßiger Hinsicht wird die eingangs genannte Aufgabe dadurch gelöst, dass der Werkzeugkopf bei der Bearbeitung mindestens einer Lagerplatte so geführt wird, dass er in einen Freiraum zwischen den Rändern der eine Hohlkontur aufweisenden Begrenzungswand eingreift. Damit kann eine optimierte Gelenkstelle mit den vorstehend bereits genannten Vorteilen präzise hergestellt werden.

Vorteilhafterweise wird der Werkzeugkopf zur Erzeugung der ersten Lagerbohrung in einer ersten Vorschubrichtung und zur Erzeugung der zweiten Lagerbohrung in einer zur ersten Vorschubrichtung entgegengesetzten zweiten Vorschubrichtung im Bereich zwischen den Lagerplatten bewegt.

Im Folgenden wird die Erfindung anhand des in der Zeichnung schematisch dargestellten Ausführungsbeispiels näher erläutert. Es zeigen:
- Fig. 1: eine Autobetonpumpe mit an einer Gelenkstelle angelenkten hinteren Stützbeinen in Seitenansicht;
- Fig. 2: eine ausschnittsweise perspektivische Darstellung der Gelenkstelle;
- Fig. 3: die Fertigung der Lagerbohrungen der Gelenkstelle mittels eines Bohrkopfs in schaubildlicher Darstellung.

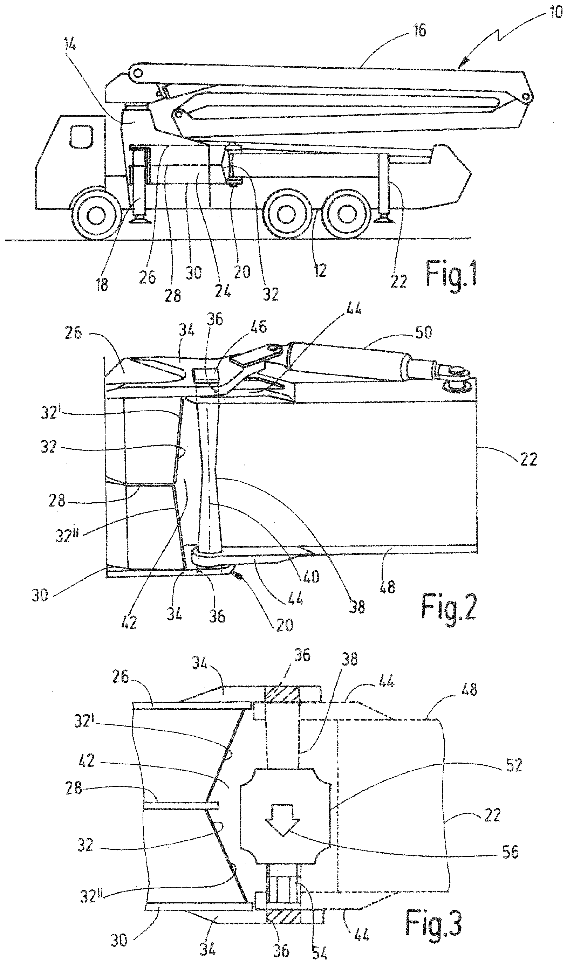

Die in Fig. 1 dargestellte Autobetonpumpe 10 umfasst ein Fahrgestell 12, eine darauf angebrachte fahrzeugfeste Tragstruktur 14, einen darauf um eine vertikale Drehachse drehbar gelagerten Betonverteilermast 16 und eine aus zwei teleskopierbaren vorderen Stützbeinen 18 und zwei über jeweils eine Gelenkstelle 20 mit der Tragstruktur 14 gelenkig verbundene, um eine vertikale Schwenkachse ausschwenkbare Stütz- bzw. Schwenkbeine 22. Die Stützbeine 18, 20 lassen sich aus der gezeigten Fahrstellung in eine von der Fahrzeuglängsachse weiter entfernte Abstützstellung bewegen.

Jede Gelenkstelle 20 ist an einer Kastenkonstruktion 24 angeordnet, die aus drei Gurtblechen 26, 28, 30 und daran angeschweißten Wandblechen gebildet. Dabei weist eine der Gelenkstelle 20 zugewandte Begrenzungswand 32 eine dreieckförmige Hohlkontur auf.

Wie am besten aus Fig. 2 ersichtlich, umfassen die Gelenkstellen 20 jeweils zwei an den Gurten 26, 30 angeschweißte Lagerplatten 34 auf, die in ihren über die Begrenzungswand 32 gabelförmig überstehenden Bereichen mit Lagerbohrungen 36 versehen sind, durch die ein Gelenkbolzen 38 hindurchgeführt ist. Die Lagerplatten 34 sind als Vollmetallplatten ausgebildet und besitzen eine Dicke von etwa 4 cm. Die Lagerbohrungen 36 fluchten miteinander in Richtung der vertikalen Achse 40 des Gelenkbolzens 38. Dabei ist der Abstand zwischen dem Rand der Lagerbohrungen 36 und dem oberen und unteren Rand der Begrenzungswand 32 kleiner als der Durchmesser der Lagerbohrungen 36.

Die Begrenzungswand 32 weist zwei stumpfwinklig aufeinander zulaufende Wandteile 32', 32" auf, die einen im Querschnitt dreieckförmigen Freiraum 42 begrenzen. Die Begrenzungswand 32 besitzt somit in ihrem Mittelbereich zwischen den Lagerplatten 34 einen größeren Abstand zu der Achse 40 des Gelenkbolzens 38 als in ihren an den Lagerplatten 34 angrenzenden Randbereichen. Zudem weist der Gelenkbolzen 38 in seinem Mittelbereich einen kleineren Durchmesser als in seinen die Lagerplatten 34 durchsetzenden Endabschnitten auf. Auf diese Weise wird zwischen den Lagerbohrungen 36 angrenzend an den Mittelgurt 28 ein verbreiterter Freiraum geschaffen, der für nicht gezeigte Einbauten von Funktionsteilen wie Schwenksensoren zur Verfügung steht und die nachstehend näher erläuterte maschinelle Bohrungsbearbeitung bei geringem Laschenüberstand erlaubt.

Wie aus Fig. 2 weiter ersichtlich, besitzt jedes Schwenkbein 22 zwei Lagerlaschen 44, welche die tragstrukturseitigen Lagerplatten 34 paarweise seitlich überlappen und von dem Gelenkbolzen 38 durchsetzt sind. Dieser ist endseitig über Stirnplatten 46 an den Lagerplatten 34 gehalten. Die Lagerlaschen 44 sind an einem horizontalen Stützbeinarm 48 befestigt, der beispielsweise mittels Hydraulikzylinder 50 verschwenkbar ist.

Fig. 3 veranschaulicht die Herstellung der Lagerbohrungen 36 im Vollmaterial der Lagerplatten 34 mit Hilfe eines Werkzeugkopfs 52 eines nicht gezeigten weiter gezeigten herkömmlichen maschinellen Bearbeitungszentrums. Solche Werkzeugköpfe 52 sind mit einem geeigneten Werkzeug 54 (Fräser, Bohrer) ausgestattet, das von einem Futter gehalten und über einen Motor angetrieben wird. Der Werkzeugkopf 52 nimmt dabei deutlich mehr Raum ein als das Werkzeug 54 selbst. Die Dimension des Werkzeugkopfs 52 würde keine Rolle spielen, wenn die Bohrungen in die Lagerplatten 34 der Tragstruktur 14 jeweils von oben bzw. von unten eingebracht würden, da dort ausreichend Raum für das Bearbeitungsgerät bleibt. Ein solches Vorgehen würde aber ein Drehen um 180° der Tragstruktur 14 bzw. des Mastbocks bedeuten, da Bearbeitungszentren üblicherweise in ihrem Werkzeughub sehr begrenzt sind und damit der Hub nicht zum Einbringen der Lagerbohrungen von oben und von unten ausreicht. Das Drehen des Mastbocks wiederum bedeutet entsprechend aufwändige und teure Vorrichtungen zur Fixierung des schweren Bauteils bzw. Ungenauigkeiten beim Einbringen der Bohrung durch das Drehen selbst.

Erfindungsgemäß wird daher mindestens eine Lagerbohrung 36 von dem Innenbereich zwischen den Lagerplatten 34 aus eingebracht. Dabei greift der Werkzeugkopf 52 in den erweiterten Freiraum 42 neben dem Zentralbereich der Begrenzungswand 32 ein und fährt das Werkzeug 54 nahe dem unteren Rand des Wandteils 32" nach unten, wie durch Pfeil 56 veranschaulicht. Die obere Lagerbohrung kann dann unter 180°-Drehung des Werkzeugkopfs 52 in entgegengesetzter Vorschubrichtung erzeugt werden, oder alternativ von der Oberseite her durch Vorschub nach unten. Diese Vorgehensweise ermöglicht es, den Überstand der Lagerplatten 34 im hochbelasteten Anschlussbereich an die Tragstruktur 14 zu minimieren. Anschließend wird der Stützbeinarm 48 mit seinen Lagerlaschen 44 so eingesetzt, dass der Gelenkbolzen 38 zur gelenkigen Verbindung montiert werden kann.

## Patentansprüche

1. Fahrbare Arbeitsmaschine, insbesondere Autobetonpumpe (10), mit einer fahrzeugfesten Tragstruktur (14) insbesondere für einen Betonverteilermast (16) und mehreren über jeweils eine Gelenkstelle (20) mit der Tragstruktur (14) gelenkig verbundenen Stützbeinen (22), wobei jede Gelenkstelle (20) zwei im seitlichen Abstand voneinander über den Rand einer Begrenzungswand (32) der Tragstruktur (14) gabelförmig überstehende, aus einem Vollmaterial gebildete und mit jeweils einer Lagerbohrung (36) versehene Lagerplatten (34) und einen die miteinander fluchtenden Lagerbohrungen (36) vertikal durchsetzenden Gelenkbolzen (38) umfasst, **dadurch gekennzeichnet, dass** der Gelenkbolzen (38) in seinem Mittelbereich zwischen den Lagerplatten (34) einen kleineren Durchmesser als in seinen die Lagerplatten (34) durchsetzenden Endabschnitten aufweist.

2. Arbeitsmaschine nach Anspruch 1, **dadurch gekennzeichnet, dass** die dem Gelenkbolzen (38) zugewandte Begrenzungswand (32) in ihrem Mittelbereich zwischen den Lagerplatten (34) einen größeren Abstand zu der Achse (40) des Gelenkbolzens (38) als in ihren an den Lagerplatten (34) angrenzenden Randbereichen aufweist.

3. Arbeitsmaschine nach Anspruch 2, **dadurch gekennzeichnet, dass** die Begrenzungswand (32) eine dem Gelenkbolzen (38) zugewandte, konkave oder winklige Hohlkontur aufweist.

4. Arbeitsmaschine nach Anspruch 2 oder 3, **dadurch gekennzeichnet, dass** die Begrenzungswand (32) zwei stumpfwinklig aufeinander zulaufende Wandteile (32',32") aufweist, wobei die Wandteile einen im Querschnitt dreieckförmigen Freiraum (42) begrenzen.

5. Arbeitsmaschine nach einem der Ansprüche 2 bis 4, **dadurch gekennzeichnet, dass** die Begrenzungswand (32) mit einem Obergurt (26) und einem Untergurt (30) als Kastenkonstruktion verschweißt ist, und dass die Lagerplatten (34) an dem Ober- bzw. Untergurt starr befestigt sind.

6. Arbeitsmaschine nach einem der Ansprüche 2 bis 5, **dadurch gekennzeichnet, dass** die Lagerbohrung (36) mittels eines Bohr- oder Fräswerkzeugs (54) in dem Vollmaterial der Lagerplatte (34) gebildet ist.

7. Arbeitsmaschine nach einem der Ansprüche 2 bis 6, **dadurch gekennzeichnet, dass** die Lagerplatten (34) als Vollmetallplatten eine Dicke von mehr als 20 mm aufweisen.

8. Arbeitsmaschine nach einem der Ansprüche 2 bis 7, **dadurch gekennzeichnet, dass** der Abstand zwischen dem Rand der Lagerbohrungen (36) und der Begrenzungswand (32) kleiner als der Durchmesser der Lagerbohrungen (36) ist.

9. Arbeitsmaschine nach einem der Ansprüche 2 bis 8, **dadurch gekennzeichnet, dass** die Stützbeine (22) über jeweils zwei Lagerlaschen (44) an dem Gelenkbolzen (38) angelenkt sind, wobei sich die Lagerplatten (34) und Lagerlaschen (44) paarweise seitlich überlappen.

10. Verfahren zur Herstellung einer Gelenkstelle (20) für die Stützbeine (22) einer fahrbaren Arbeitsmaschine (10) nach einem der vorhergehenden Ansprüche, bei dem mittels eines Werkzeugkopfs (52) einer Bearbeitungsmaschine die Lagerplatten (34) mit jeweils einer Lagerbohrung (36) versehen werden, **dadurch gekennzeichnet, dass** der Werkzeugkopf (52) bei der Bearbeitung mindestens einer Lagerplatte (34) in einen Freiraum (42) zwischen den Rändern der eine Hohlkontur aufweisenden Begrenzungswand (32) eingreift.

11. Verfahren nach Anspruch 10, **dadurch gekennzeichnet, dass** der Werkzeugkopf (52) zur Erzeugung der ersten Lagerbohrung (36) in einer ersten Vorschubrichtung und zur Erzeugung der zweiten Lagerbohrung (36) in einer zur ersten Vorschubrichtung entgegengesetzten zweiten Vorschubrichtung bewegt wird.

## Claims

1. A mobile working machine, in particular an automotive concrete pump (10), having a carrying structure (14), which is fixed to a vehicle, in particular for a concrete distributor boom (16), and a plurality of support legs (22) that are hinge-jointed to the carrying structure (14) via a respective hinge point (20), wherein each hinge point (20) comprises two bearing plates (34) made from solid material, each provided with a bearing bore (36) and projecting in a forked manner at a lateral distance from each other over the edge of a delimiting wall (32) of the carrying structure (14), and a hinge pin (38) extending vertically through the mutually aligned bearing bores (36), **characterized in that** the hinge pin (38) has a lesser diameter in its middle region, between the bearing plates (34), than in its end portions that extend through the bearing plates (34).

2. The working machine as claimed in claim 1, **characterized in that** the delimiting wall (32) facing toward the hinge pin (38) has a greater distance from the axis (40) of the hinge pin (38) in its middle region, between the bearing plates (34), than in its edge regions that are adjacent to the bearing plates (34).

3. The working machine as claimed in claim 2, **characterized in that** the delimiting wall (32) has a concave or angular hollow contour facing toward the hinge pin (38).

4. The working machine as claimed in claim 2 or 3, **characterized in that** the delimiting wall (32) has two wall parts (32', 32") that taper toward each other at an obtuse angle, wherein the wall parts delimit a free space (42) that is triangular in cross section.

5. The working machine as claimed in any one of claims 2 to 4, **characterized in that** the delimiting wall (32) is welded to an upper flange (26) and a lower flange (30), as a box-type structure, and the bearing plates (34) are rigidly fastened to the upper and the lower flange.

6. The working machine as claimed in any one of claims 2 to 5, **characterized in that** the bearing bore (36) is formed, by means of a drilling or milling-cutting tool (54), in the solid material of the bearing plate (34).

7. The working machine as claimed in any one of claims 2 to 6, **characterized in that** the bearing plates (34), as solid metal plates, have a thickness of more than 20 mm.

8. The working machine as claimed in any one of claims 2 to 7, **characterized in that** the distance between the edge of the bearing bores (36) and the delimiting wall (32) is less than the diameter of the bearing bores (36).

9. The working machine as claimed in any one of claims 2 to 8, **characterized in that** the support legs (22) are hinge-coupled to the hinge pin (38) via respectively two bearing link plates (44), wherein the bearing plates (34) and bearing link plates (44) overlap each other laterally in pairs.

10. A method for producing a hinge point (20) for the support legs (22) of a mobile working machine (10) as claimed in any one of the preceding claims, in which the bearing plates (34) are each provided with a bearing bore (36) by means of a tool head (52) of a machining center, **characterized in that,** in the machining of at least one bearing plate (34), the tool head (52) engages in a free space (42) between the edges of the delimiting wall (32) that has a hollow contour.

11. The method as claimed in claim 10, **characterized in that** the tool head (52), for the purpose of producing the first bearing bore (36), is moved in a first feed direction and, for the purpose of producing the second bearing bore (36), is moved in a second feed direction that is opposite to the first feed direction.

## Revendications

1. Machine de travail mobile, en particulier pompe à béton automotrice (10), comprenant une structure porteuse (14) solidaire du véhicule, notamment pour un mât distributeur de béton (16), et plusieurs béquilles (22) reliées de manière articulée à la structure porteuse (14) par respectivement un point d'articulation (20), chaque point d'articulation (20) comprenant deux plaques d'appui (34) en matériau plein, faisant saillie en fourche à une distance latérale l'une de l'autre au-delà du bord d'une paroi de délimitation (32) de la structure porteuse (14) et munies de respectivement un alésage d'appui (36), et un boulon d'articulation (38) traversant verticalement les alésages d'appui (36) alignés entre eux, **caractérisée en ce que** le boulon d'articulation (38) présente dans sa partie centrale entre les plaques d'appui (34) un diamètre plus petit que dans ses sections terminales traversant les plaques d'appui (34).

2. Machine de travail selon la revendication 1, **caractérisée en ce que** la paroi de délimitation (32) faisant face au boulon d'articulation (38), dans sa partie centrale entre les plaques d'appui (34), est davantage éloignée de l'axe (40) du boulon d'articulation (38) que dans ses parties périphériques adjacentes aux plaques d'appui (34).

3. Machine de travail selon la revendication 2, **caractérisée en ce que** la paroi de délimitation (32) possède un contour creux concave ou angulaire faisant face au boulon d'articulation (38).

4. Machine de travail selon la revendication 2 ou 3, **caractérisée en ce que** la paroi de délimitation (32) présente deux éléments de paroi (32', 32") convergeant l'un vers l'autre suivant un angle obtus, lesdits éléments de paroi délimitant un espace libre (42) de section triangulaire.

5. Machine de travail selon l'une des revendications 2 à 4, **caractérisée en ce que** la paroi de délimitation (32) est assemblée par soudage avec une semelle supérieure (26) et une semelle inférieure (30) sous forme de construction de caisse, et **en ce que** les plaques d'appui (34) sont fixées rigidement auxdites semelles supérieure resp. inférieure.

6. Machine de travail selon l'une des revendications 2 à 5, **caractérisée en ce que** l'alésage d'appui (36) est formé au moyen d'un outil de perçage ou de fraisage (54) dans le matériau plein de la plaque d'appui (34).

7. Machine de travail selon l'une des revendications 2 à 6, **caractérisée en ce que** les plaques d'appui (34) en tant que plaques en matériau plein ont une épaisseur supérieure à 20 mm.

8. Machine de travail selon l'une des revendications 2 à 7, **caractérisée en ce que** la distance entre le bord des alésages d'appui (36) et la paroi de délimitation (32) est inférieure au diamètre des alésages d'appui (36).

9. Machine de travail selon l'une des revendications 2 à 8, **caractérisée en ce que** les béquilles (22) sont articulées au boulon d'articulation (38) par respectivement deux pattes d'appui (44), les plaques d'appui (34) et les pattes d'appui (44) se chevauchant latéralement par paires.

10. Procédé de fabrication d'un point d'articulation (20) pour les béquilles (22) d'une machine de travail mobile (10) selon l'une des revendications précédentes, selon lequel les plaques d'appui (34) sont pourvues de respectivement un alésage d'appui (36) au moyen d'une tête d'outil (52) d'une machine d'usinage, **caractérisé en ce que** lors de l'usinage d'au moins une plaque d'appui (34) la tête d'outil s'introduit dans l'espace libre (42) entre les bords de la paroi de délimitation (32) à contour creux.

11. Procédé selon la revendication 10, **caractérisé en ce que** la tête d'outil (52) est déplacée dans une première direction d'avance pour produire le premier alésage d'appui (36) et dans une deuxième direction d'avance, opposée à la première, pour produire le deuxième alésage d'appui (36).
